# EUROPEAN PATENT APPLICATION

(11) **EP 4 734 083 A1**
(43) Date of publication of application: **29.04.2026**
(21) Application number: 24207973.9
(22) Date of filing: 22.10.2024
(51) Int. Cl.: G07C 9/00, B60R 25/00, G06F 21/32

(54) **ACCESS DEVICE AND OPERATING METHOD**

(71) Applicant: NXP B.V., 5656 AG Eindhoven (NL)
(72) Inventor: Püttjer, Leonard Clemens, 5656 AG Eindhoven (NL); Jespers, Frieder Jonas, 5656 AG Eindhoven (NL)
(74) Representative: Krott, Michel

(57) **Abstract**

In accordance with a first aspect of the present disclosure, an access device is provided, comprising: an ultra-wideband (UWB) ranging unit configured to perform one or more ranging operations; a gait determination unit configured to determine a gait of a user of the access device; a processing unit configured to analyze the gait determined by the gait determination unit and to allow the UWB ranging unit to perform said ranging operations in dependence on a result of analyzing said gait. In accordance with further aspects of the present disclosure, a corresponding operating method is conceived, and a corresponding computer program is provided.

## Description

### TECHNICAL FIELD

The present disclosure relates to an access device. Furthermore, the present disclosure relates to a corresponding method of operating an access device, and to a corresponding computer program.

### BACKGROUND

Ultra-wideband (UWB) communication technology is a technology that uses a high signal bandwidth, in particular for transmitting digital data over a wide spectrum of frequency bands with very low power. For example, UWB technology may use the frequency spectrum of 3.1 to 10.6 GHz and may feature a high-frequency bandwidth of more than 500 MHz and very short pulse signals, potentially capable of supporting high data rates. The UWB technology enables a high data throughput for communication devices and a high precision for the localization of devices. In particular, UWB technology may be used for so-called ranging operations, i.e. for determining the distance between communicating devices. Therefore, UWB technology may be used to advantage in various applications, in particular for enabling access to different types of objects (e.g., vehicles and buildings).

### SUMMARY

In accordance with a first aspect of the present disclosure, an access device is provided, comprising: an ultra-wideband (UWB) ranging unit configured to perform one or more ranging operations; a gait determination unit configured to determine a gait of a user of the access device; a processing unit configured to analyze the gait determined by the gait determination unit and to allow the UWB ranging unit to perform said ranging operations in dependence on a result of analyzing said gait.

In one or more embodiments, the processing unit is configured to analyze the gait determined by the gait determination unit by comparing said gait with a stored, predetermined gait profile.

In one or more embodiments, the gait profile has been predetermined using a machine learning model.

In one or more embodiments, the processing unit is configured to allow the UWB ranging unit to perform said ranging operations if the gait determined by the gait determination unit matches the gait profile.

In one or more embodiments, the processing unit is configured to initiate a manual user authentication process if the gait determined by the gait determination unit does not match the gait profile.

In one or more embodiments, the gait determination unit is implemented as an accelerometer or an inertial measurement unit.

In one or more embodiments, the gait determination unit comprises a receiver configured to receive data indicative of a result of one or more UWB-based radar operations performed by an external UWB radar unit.

In one or more embodiments, the gait determination unit is configured to extract the gait from previous ranging operations performed by the UWB ranging unit.

In one or more embodiments, the gait profile is stored in a secure memory of the access device.

In one or more embodiments, the access device is configured to enable access to a vehicle or a building.

In one or more embodiments, the access device is implemented as a smartphone, a smartwatch or a key fob.

In accordance with a second aspect of the present disclosure, a method of operating an access device is conceived, comprising: determining, by a gait determination unit included in the access device, a gait of a user of the access device; analyzing, by a processing unit included in the access device, the gait determined by the gait determination unit; allowing, by the processing unit, an ultra-wideband (UWB) ranging unit included in the access device to perform one or more ranging operations in dependence on a result of analyzing said gait.

In one or more embodiments, the processing unit analyzes the gait determined by the gait determination unit by comparing said gait with a stored, predetermined gait profile.

In one or more embodiments, the gait profile has been predetermined using a machine learning model.

In accordance with a third aspect of the present disclosure, a computer program is provided, comprising executable instructions which, when executed by a processing unit included in an access device, cause said processing unit to: analyze a gait of a user of the access device, wherein said gait has been determined by a gait determination unit included in the access device; allow an ultra-wideband (UWB) ranging unit included in the access device to perform one or more ranging operations in dependence on a result of analyzing said gait.

### DESCRIPTION OF DRAWINGS

Embodiments will be described in more detail with reference to the appended drawings.
Fig. 1 shows an illustrative embodiment of an access device.
Fig. 2 shows an illustrative embodiment of a method of operating an access device.
Fig. 3 shows an illustrative embodiment of a secure access system.

### DESCRIPTION OF EMBODIMENTS

As mentioned above, UWB technology may be used to advantage in various applications, in particular for enabling access to different types of objects. More specifically, systems for enabling access to objects (e.g., vehicles and buildings) often rely on UWB secure ranging technology to be able to measure the distance between a user holding an access device (e.g., a smartphone, smartwatch, or dedicated key fob) and a locked object, such that the object only unlocks if the user is in proximity of the locked object. These systems rely on a one-factor authentication process, which is based on a cryptographic verification of a digital key stored in the user's access device. However, if a thief steals the access device, he or she might be able to access the locked object with that access device. This represents a security threat.

Now discussed are an access device, a corresponding method of operating an access device, and a corresponding computer program, which facilitate increasing the security level of access systems of the kind set forth. The presently disclosed access device, operating method and computer program may be used to enable a more secure access to a vehicle or a building, for example. Furthermore, the presently disclosed access device may be implemented as a smartphone, a smartwatch or a key fob, for example.

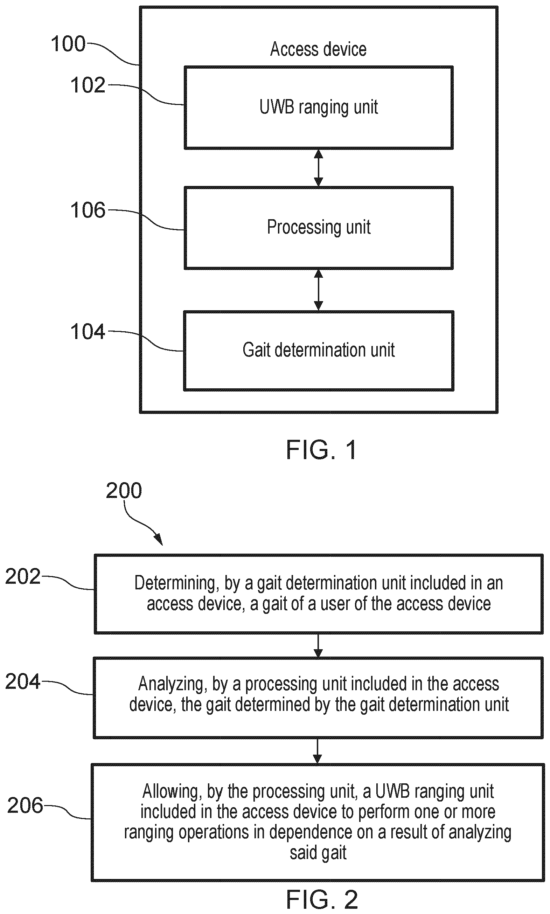

Fig. 1 shows an illustrative embodiment of an access device 100. The access device 100 comprises a UWB ranging unit 102, a gait determination unit 104, and a processing unit 106. The UWB ranging unit 102 is configured to perform one or more ranging operations. The gait determination unit 104 is configured to determine a gait of a user of the access device 100. Furthermore, the processing unit 106 is configured to analyze the gait determined by the gait determination unit 104 and to allow the UWB ranging unit 102 to perform said ranging operations in dependence on a result of analyzing said gait. In this way, a second factor (i.e., the gait of the user) is added to the UWB ranging-based authentication, such that the security level of a system in which the access device 100 is used is increased. It is noted that, although the UWB ranging unit 102, gait determination unit 104 and processing unit 106 are shown as separate units, some or all of these units may be integrated into a single physical component of the access device 100.

In one or more embodiments, the processing unit is configured to analyze the gait determined by the gait determination unit by comparing said gait with a stored, predetermined gait profile. In this way, the gait of the user may easily be analyzed. In one or more embodiments, the gait profile has been predetermined using a machine learning model. In this way, a reliable, gait-based second authentication factor may be obtained. Furthermore, in one or more embodiments, the processing unit is configured to allow the UWB ranging unit to perform said ranging operations if the gait determined by the gait determination unit matches the gait profile. This facilitates performing the UWB ranging conditionally, i.e. only if the condition that the gait of the user is successfully verified is met. This, in turn, further facilitates increasing the security level of access systems of the kind set forth. The skilled person will appreciate that the term "match" does not imply that the data which are compared with each other should always be exactly the same. Rather, in some implementations a predefined error margin may be taken into account when comparing these data, while in other implementations no error margin will be allowed.

In one or more embodiments, the processing unit is configured to initiate a manual user authentication process if the gait determined by the gait determination unit does not match the gait profile. In this way, an additional authentication step may easily be triggered if a security breach is suspected, which further facilitates increasing the security level of access systems of the kind set forth.

In one or more embodiments, the gait determination unit is implemented as an accelerometer or an inertial measurement unit. An accelerometer or inertial measurement unit (IMU) may provide a reliable gait measurement. Furthermore, many user devices are already equipped with an accelerometer or IMU, such that no additional component needs to be added to the device. In one or more embodiments, the gait determination unit is implemented as a receiver configured to receive data indicative of a result of one or more UWB-based radar operations performed by an external UWB radar unit. In this way, the access device itself does not need to be equipped with dedicated hardware for determining or sensing the gait. In particular, a UWB radar unit included in (for example) a vehicle or a building may sense the gait of an approaching user by performing one or more UWB radar operations and transmit the result of these operations to the gait determination unit of the access device. Furthermore, in one or more embodiments, the gait determination unit is configured to extract the gait from previous ranging operations performed by the UWB ranging unit. In this way, the access device may use the UWB ranging unit for two purposes: first to perform one or more ranging operations to determine the gait, and then to allow the UWB ranging unit to perform subsequent ranging operations to enable access to a vehicle or a building. For instance, such previous ranging operations for determining the gait may include angle-or-arrival and distance measurements.

Furthermore, in one or more embodiments, the gait profile is stored in a secure memory of the access device. This makes it more difficult to access the gait profile and manipulate it, such that the security level of a system in which the access device is used is further increased.

UWB technology - also referred to as impulse-radio ultra-wideband (IR-UWB) - is an RF communication technology that uses pulses having a short duration for data communication. An important feature of IR-UWB technology is that it can be used for secure and accurate distance measurements between two or more devices. Typical distance measurement methods are the so-called single-sided two-way ranging (SS-TWR) method and the double-sided two-way ranging (DS-TWR) method. In addition to ranging operations of this kind, UWB devices may also carry out radar operations. Thus, UWB devices may operate in a ranging mode, as well as in a radar mode.

In a ranging mode of operation, frames will typically be exchanged between two devices via at least one antenna on each device, and at least a SS-TWR operation will be carried out (which may also be referred to as a ping-pong operation). In particular, channel impulse responses (CIRs) are estimated on both devices, timestamps will be generated based on the CIRs on both devices, and those timestamps are exchanged. Then, a time of flight (ToF) is calculated based on the timestamps and a range (i.e., a distance) is calculated based on the ToF. Alternatively, a DS-TWR operation may be carried out (which may also be referred to as a ping-pong-ping operation). It is noted that an angle-of-arrival (AoA) mode of operation is similar to a ranging mode, but it involves at least two antennas on one device. In particular, in an AoA mode of operation, two phase values associated with at least two CIRs are calculated on one device. Then, a phase difference of arrival (PDoA) is calculated based on the two phase values, and an AoA is calculated based on the PDoA. An AoA mode of operation may facilitate a more accurate determination of the position of an object, and may thus complement ranging operations performed in the ranging mode. As used in this description, the ranging mode of operation may therefore be extended to include the AoA mode of operation, in the sense that when a device operates in the ranging mode, it may optionally perform additional operations which are typically performed in the AoA mode of operation. Furthermore, as used herein, the ranging mode may include performing operations based on a so-called Time Difference of Arrival (TDoA) technique, instead of a ToF technique. The TDoA technique is particularly suitable for real-time localization operations. Generally speaking, the term "ranging mode" covers all types localization operations based on UWB message exchanges with an external UWB communication device. It is noted that AoA calculations may be used in combination with both ToF calculations and TDoA calculations.

In a radar mode of operation, frames are transmitted by at least one device and those frames are received by the same device and/or by one or more other devices. Then, the CIRs are estimated on the device or devices receiving the frames, and the range and/or velocity and/or AoA are calculated based on the estimated CIRs. Thus, AoA calculations may also be performed in the radar mode of operation. A radar mode of operation may be used to advantage to detect (i.e., sense) the presence of objects or human beings. However, a radar mode of operation may also be used to estimate a distance, although with a lower accuracy than the ranging mode of operation will typically achieve. The skilled person will appreciate that the given examples are non-limiting examples of how the different modes of operation can be implemented. In other words, the modes may be implemented differently, depending on the requirements imposed by the application, for example.

**Fig. 2** shows an illustrative embodiment of a method 200 of operating an access device. The method 200 comprises the following steps. At 202, a gait determination unit included in an access device determines a gait of a user of the access device. At 204, a processing unit included in the access device analyzes the gait determined by the gait determination unit. Furthermore, at 206, the processing unit allows a UWB ranging unit included in the access device to perform one or more ranging operations in dependence on a result of analyzing said gait. As explained with reference to the corresponding access device shown in Fig. 1, the method facilitates increasing the security level of a system in which the access device is used.

In accordance with the present disclosure, a secure access to objects may be enabled. In particular, UWB-based ranging may be used to enable access to secured objects, such as vehicles and buildings, in a seamless manner. In particular, a digital key may be stored on a chip that is integrated into a traditional, physical car key. Alternatively, a digital key may be stored in a mobile device, such as a smartphone or a smartwatch. In addition, sensor signals from, for example, accelerometers or IMUs (which are typically already integrated in portable devices holding the digital key) may be used to train a machine learning model. This machine learning model may learn the gait profile of a user, in order to classify - at a later stage, i.e. when the access device is in use - if the user is authorized to access the secured object or not. The gait of humans adds unique, person-specific information to the access request, which may be evaluated prior to granting access to the secured object. In this way, a seamless, two-factor authentication process may be realized, which does not require human interaction with the digital key. Thus, a strong security feature is added without compromising the user convenience.

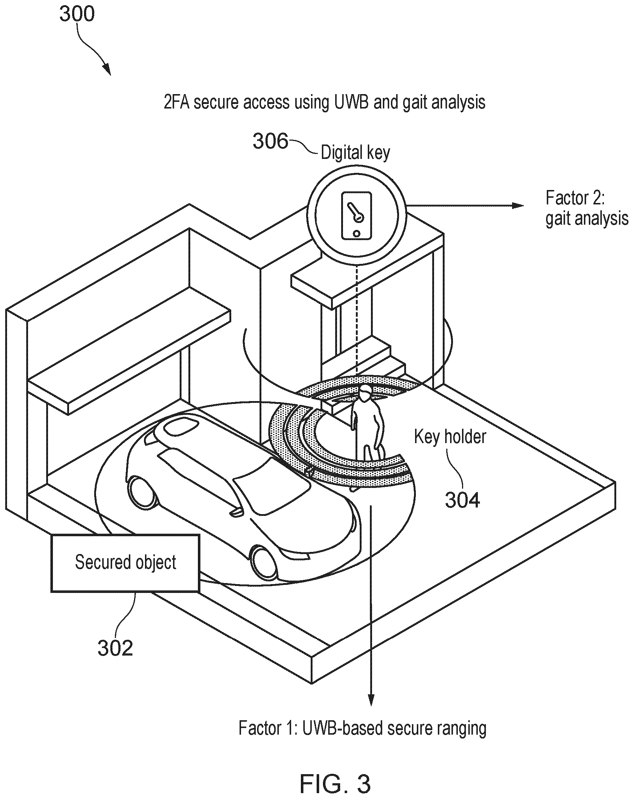

**Fig. 3** shows an illustrative embodiment of a secure access system 300. The system 300 comprises a secured object 302 and an access device with a digital key 306 stored therein, which is carried by a key holder 304. In this system 300, a secure authentication process may be implemented as follows. First, the gait of the key holder 304 may be learned during a learning phase of the system 300. During this learning phase, the key holder 304 trains the access device in which the digital key 306 is stored; this access device is equipped with a suitable gait determination unit and a processing unit able to perform the gait analysis. The training results in a gait profile, which may be stored securely in the access device. Subsequently, during an application phase of the system 300, the trained access device monitors the gait of the key holder 304 when he or she approaches the secured object 302. In case of a match between the determined gait and the gait profile, the processing unit may trigger the access device to start with a UWB-based secure ranging session. Then, if the ranging session outputs data indicative of the fact that the access device carried by the key holder 304 is within a predefined area around the secured object 302, access to the object 302 may be granted. In contrast, if the determined gait does not match the gait profile, an additional authentication may be required, before the UWB-based secure ranging session can be initiated. This additional authentication may be an authentication that requires user input, such as a PIN input, a face shown to a camera, or a fingerprint input.

The skilled person will appreciate that the application flow described above with reference to the secure access system shown in Fig. 3 merely represents a non-limiting example. In another non-limiting example, Bluetooth Channel Sounding might be used to sense proximity to the secured object 302. Subsequently, if the secured object 302 has been sensed, the gait of the user may be determined and analyzed using one or more of the above-described methods. Then, if the determined gait matches the gait profile, UWB ranging may be started in order to accurately measure the distance to the secured object 302 and unlock the secured object 302. Thus, Bluetooth Channel Sounding may be used as a low-power method to trigger the gait determination, gait analysis and UWB ranging if the secured object 302 has been sensed.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: access device
- 102: UWB ranging unit
- 104: gait determination unit
- 106: processing unit
- 200: method of operating an access device
- 202: determining, by a gait determination unit included in an access device, a gait of a user of the access device
- 204: analyzing, by a processing unit included in the access device, the gait determined by the gait determination unit
- 206: allowing, by the processing unit, a UWB ranging unit included in the access device to perform one or more ranging operations in dependence on a result of analyzing said gait
- 300: secure access system
- 302: secured object
- 304: key holder
- 306: digital key

## Claims

1. An access device, comprising:
an ultra-wideband, UWB, ranging unit configured to perform one or more ranging operations;
a gait determination unit configured to determine a gait of a user of the access device;
a processing unit configured to analyze the gait determined by the gait determination unit and to allow the UWB ranging unit to perform said ranging operations in dependence on a result of analyzing said gait.

2. The access device of claim 1, wherein the processing unit is configured to analyze the gait determined by the gait determination unit by comparing said gait with a stored, predetermined gait profile.

3. The access device of claim 2, wherein the gait profile has been predetermined using a machine learning model.

4. The access device of claim 2 or 3, wherein the processing unit is configured to allow the UWB ranging unit to perform said ranging operations if the gait determined by the gait determination unit matches the gait profile.

5. The access device of any one of claims 2 to 4, wherein the processing unit is configured to initiate a manual user authentication process if the gait determined by the gait determination unit does not match the gait profile.

6. The access device of any preceding claim, wherein the gait determination unit is implemented as an accelerometer or an inertial measurement unit.

7. The access device of any preceding claim, wherein the gait determination unit comprises a receiver configured to receive data indicative of a result of one or more UWB-based radar operations performed by an external UWB radar unit.

8. The access device of any preceding claim, wherein the gait determination unit is configured to extract the gait from previous ranging operations performed by the UWB ranging unit.

9. The access device of any preceding claim, wherein the gait profile is stored in a secure memory of the access device.

10. The access device of any preceding claim, being configured to enable access to a vehicle or a building.

11. The access device of any preceding claim, being implemented as a smartphone, a smartwatch or a key fob.

12. A method of operating an access device, comprising:
determining, by a gait determination unit included in the access device, a gait of a user of the access device;
analyzing, by a processing unit included in the access device, the gait determined by the gait determination unit;
allowing, by the processing unit, an ultra-wideband, UWB, ranging unit included in the access device to perform one or more ranging operations in dependence on a result of analyzing said gait.

13. The method of claim 12, wherein the processing unit analyzes the gait determined by the gait determination unit by comparing said gait with a stored, predetermined gait profile.

14. The method of claim 13, wherein the gait profile has been predetermined using a machine learning model.

15. A computer program comprising executable instructions which, when executed by a processing unit included in an access device, cause said processing unit to:
analyze a gait of a user of the access device, wherein said gait has been determined by a gait determination unit included in the access device;
allow an ultra-wideband, UWB, ranging unit included in the access device to perform one or more ranging operations in dependence on a result of analyzing said gait.

## Amended claims

### Amended claims in accordance with Rule 137(2) EPC.

1. An access device (100) storing a digital key (306) for enabling access to a secure object (308), the access device (100) comprising:
an ultra-wideband, UWB, ranging unit (102) configured to perform a plurality of ranging operations by communicating with the secured object (308) to determine the gait of a user of the access device (100) and to perform UWB-ranging based authentication using the digital key;
a gait determination unit (104) configured to determine the gait of the user of the access device (100) by extracting the gait from previous ranging operations performed by the UWB ranging unit (102); and
a processing unit (106) configured to analyze the gait determined by the gait determination unit (104) and to allow the UWB ranging unit (102) to perform said UWB-ranging based authentication in dependence on a result of analyzing said gait.

2. The access device (100) of claim 1, wherein the processing unit (106) is configured to analyze the gait determined by the gait determination unit (104) by comparing said gait with a stored, predetermined gait profile.

3. The access device (100) of claim 2, wherein the gait profile has been predetermined using a machine learning model.

4. The access device (100) of claim 2 or 3, wherein the processing unit (106) is configured to allow the UWB ranging unit (102) to perform said UWB-ranging based authentication if the gait determined by the gait determination unit (104) matches the gait profile.

5. The access device (100) of any one of claims 2 to 4, wherein the processing unit (106) is configured to initiate a manual user authentication process if the gait determined by the gait determination unit (104) does not match the gait profile.

6. The access device (100) of any preceding claim, wherein the gait profile is stored in a secure memory of the access device (100).

7. The access device (100) of any preceding claim, being implemented as a smartphone, a smartwatch or a key fob.

8. A method of operating an access device (100) storing a digital key (306) for enabling access to a secure object (308), the method comprising:
performing, by an ultra-wideband, UWB, ranging unit (102) included in the access device (100), a plurality of ranging operations by communicating with the secured object (308) to determine the gait of a user of the access device (100);
determining, by a gait determination unit (104) included in the access device (100), the gait of the user of the access device (100) by extracting the gait from previous ranging operations performed by the UWB ranging unit (102);
analyzing, by a processing unit (106) included in the access device (100), the gait determined by the gait determination unit (104);
allowing, by the processing unit (106), the UWB ranging unit (102) to perform UWB-ranging based authentication using the digital key in dependence on a result of analyzing said gait.

9. The method of claim 8, wherein the processing unit (106) analyzes the gait determined by the gait determination unit (104) by comparing said gait with a stored, predetermined gait profile.

10. The method of claim 9, wherein the gait profile has been predetermined using a machine learning model.

11. A computer program comprising executable instructions which, when executed by the processing unit (106) included in the access device (100) of claim 1, cause said processing unit (106) to:
analyze a gait of a user of the access device (100), wherein said gait has been determined by a gait determination unit (104) included in the access device;
allow the UWB ranging unit (102) included in the access device (100) to perform UWB-ranging based authentication using the digital key in dependence on a result of analyzing said gait.
